# EUROPEAN PATENT APPLICATION

(11) **EP 2 916 244 A1**
(43) Date of publication of application: **09.09.2015**
(21) Application number: 14305300.7
(22) Date of filing: 03.03.2014
(51) Int. Cl.: G06F 17/30

(54) **Method of automatically generating revisions of files and file revision repository executing the method**

(71) Applicant: Thomson Licensing, 92130 Issy-les-Moulineaux (FR)
(72) Inventor: Kamphenkel, Oliver, 31275 Lehrte (DE)
(74) Representative: Lindemann, Robert

(57) **Abstract**

A method of automatically generating revisions of files detects if a new file that is checked in to the file repository is independent from files already present in the file repository, and if so creates a new version and revision of the file in the repository. If a new file that is checked in to the file repository contains data of a different development or evolution stage of a file already present in the file repository a new revision of that file is created accordingly, identifying the new file as a predecessor or a successor to one or more files in the repository.

## Description

### Field of the invention

The present invention pertains to automatically generating revisions or versions of files having the same file names.

### Background of the invention

In the context of this specification *different revisions* of files designate two or more files having the same file name, but each file containing different stages of related content. For example, content evolving or developing over time that is stored under the very same file name.

Further, in the context of this specification *different versions* of files designate two or more files having the same file name, but each file contains content that is not linked to the content of any other version of the file having the same file name, i.e. the content of each of the file versions is independent from the other file versions.

In the following the invention is exemplarily described with reference to a movie production environment and the systems and devices used therein. However, versions and revisions of files having the same file names and relating to same or different content can occur at other occasions, e.g. in software development or the like. Thus, the invention is not limited to the exemplary environment and also covers other environments in which files having the same file names and related or unrelated content are created and need to be managed.

Files having the same file names that are not necessarily linked by their content are often found in the context of movie production. Here, film cameras provide metadata files for the content recorded. Depending on the recording device, e.g. the film camera, and its settings, such metadata file may always have the same filename, even if the contents of two metadata files are totally independent from each other. For example, on the first production day of a movie the metadata file contains information about content recorded on day one of the production. The content may relate to several takes of the same scene, or to one or more takes of different scenes. Usually, a recording medium on which the content and metadata files are stored is formatted after the stored files have been transferred to a movie production system, or revision control system. Formatting is done inter alia in order to remove any remaining data from the recording medium for the next production day. On the second production day, after formatting the recording medium, the metadata file contains information about recorded content of day two. The files generated and stored on the second production day contain information or metadata that is independent from the files stored on the first production day, but may have the same filenames.

When such - content-wise - independent files having identical filenames are automatically, i.e. without renaming or other user interaction, checked-in to a typical revision control system, the revision control system would treat the files from the second production day as a new revision of the files generated and checked in on the first production day, and all the information of the first day's files would become invalid or obsolete. In other words, the file checked in on a later day will become the head version, even if they were generated at an earlier point in time and only happen to be checked in after a - content-wise - more recent file relating to the same content had already been checked in.

Since the metadata files can also change or grow, or, more generally, evolve, during a movie production, and a user can save different revisions of the same file, it is necessary to provide a revision repository that is capable of distinguishing between checked-in files in terms of whether a new revision of a file is checked in or a completely different file is checked-in that just happens to have the same file name.

### Summary of the invention

The method described in the attached claims allows for automatically managing files that are checked in to a file repository, where files that are checked in may be independent from files already present in the file repository in terms of their content but have the same file names as files already present in the file repository. Managing includes generating a file holding a dependency structure for the files stored in the repository.

The method detects if a new file that is checked in to the file repository is independent from files already present in the file repository, and if so creates a new version of the file in the repository. If a new file that is checked in to the file repository contains data of a different development or evolution stage of a file already present in the file repository a new revision of that file is created accordingly.

In a first step the method receives a new file to be checked in to the file repository.

In order to determine whether a new file that is checked in to the file repository is a new version, a new revision, or a plain copy of a file already present in the file repository, the method includes checking if the repository holds one or more files having the same file name as the file name of the new file that is checked in to the file repository.

If this comparison operation produces no result, i.e. no file already present in the file repository has the same file name as the new file to be checked in, the new file is stored in the file repository under the first file name and is marked as a new version. This stops the execution of the method until a further new file is to be checked in, in which case the method starts over. In an embodiment, in this case the new file is assigned version 1.0 and revision 1.0.

If one or more files are found in the file repository having the same file name as the new file, for each one of these one or more files the method determines if it is a predecessor to the new file, or if it is a successor to the new file. The expressions "predecessor" and "successor" in this context relate to files that evolve over time, e.g. files that hold data that is changed over time, or to which data is added over time. Data in this context includes inter alia text, program code, pictures or video, audio, or any other information that can be stored in files, irrespective of whether or not the information evolves. In the latter case each new file will simply be considered a new version.

A file that was identified a successor or a predecessor to the new file is entered in one of two corresponding lists containing or referencing potential successors and potential predecessors, respectively.

In an embodiment, for determining whether a file is a successor or a predecessor to a new file, the method includes extracting information items from the files and comparing the extracted information items.

If the information items of the new file and of a file having the same file name that was already present in the file repository are equal, or fully correspond to each other, the new file is discarded and the method is stopped. The method starts over when a further new file is received.

If the information items of the new file and the existing file are not equal the information items are evaluated in accordance with the rules of set theory. If information items relating to the content of the new file represent a subset of information items found in the existing file, the existing file is marked as successor to the new file. On the other hand, if information items relating to the content of the new file represent a superset of information items found in the existing file, the existing file is marked as predecessor to the new file.

In this context the expressions subset and superset include, inter alia, the number of identical and non-identical information items. However, the amount of data found in related or similar, or even apparently identical information items is also considered. For example, if an information item is growing larger over time, or as the file of which it is part evolves, it may still be considered the same information item. In this case the larger one of the "identical" information items is considered a superset item of the smaller information item. It is apparent that this view works best when information items keep older information stored therein, and append newer information, rather than replacing older information. However, even in case older information is replaced with newer, more recent information, an information item may still be identified as and considered a superset item to an information item. This is readily apparent in case the information is linked to time, date, or other parameters of the same nature or suitable for that purpose. In film production, for example, the SMPTE time code, is suited for that purpose. Alternatively, any counter value that is only reset at the very beginning of a project and that is part of an information item is equally suited to replace or complement time or date information for the purpose of identifying successors or predecessors. In film recording this is found for example in scene, shot and take descriptors. In general any metadata information contained in a file may serve as information item for determining the relationships of the new file and the files existing in the file repository.

In continuing executing the method the list referencing the potential predecessors to the new file is checked if it contains entries, or if it is empty. In the latter case, i.e. the list of predecessors not having an entry, the list referencing potential successors is checked for an entry, i.e. a reference to a file in the file repository, that has no predecessor in the list of potential predecessors. If such entry is found, the new file is stored in the file repository and is marked as predecessor to this particular entry. If more than one entry having no predecessor is found the new file is marked as a predecessor to an arbitrarily selected one of those files, and the new file is marked as the first revision of a version.

If the list referencing potential predecessors to the new file is not empty, i.e. contains one or more entries, this list is checked for an entry relating to a file that itself has a successor which is also in the list of potential successors of the new file. If such an entry is found the new file is stored in the file repository and marked as intermediate revision between the two entries, i.e. the new file is marked as preceding the potential successor, and succeeding the potential predecessor. If a file found in the list of potential predecessors to the new file has no successor the new file is stored in the file repository and is marked as a successor to said file found in the list of potential predecessors. In addition, in this case the new file is marked as head revision.

If the new file cannot be associated with a predecessor or a successor from the list of potential predecessors or potential successors it is stored in the file repository and marked as the first revision of a new version.

In one embodiment of the present invention each file in the file repository has an entry, or object, associated with it, for use by the repository management, that has the following structure:

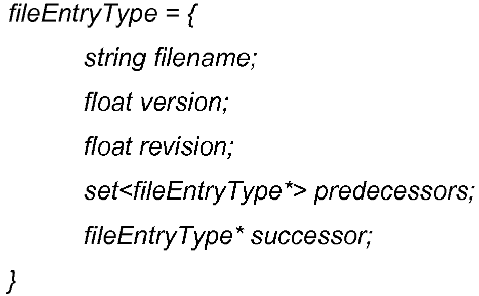

In an embodiment of the present invention this entry corresponds to the entries in the lists referencing potential predecessors and potential successors. In an embodiment these lists are stored in a database. However, a simple file comprising a table with content corresponding to the lists is also suitable for implementing this aspect of the invention.

In an embodiment, in addition to filename, version, and revision of file, the repository management stores a set of references to preceding file entries and a reference to a succeeding file entry. A file entry is the head revision of a file version, if the file entry has no successor.

In one embodiment all present information in the repository is stored in connection with the head revisions.

In one embodiment of the invention the file names are modified by attaching version and revision information. This allows for easy and reliable mapping of the list entries with files.

In the following an embodiment of the invention is described as software pseudo-code:

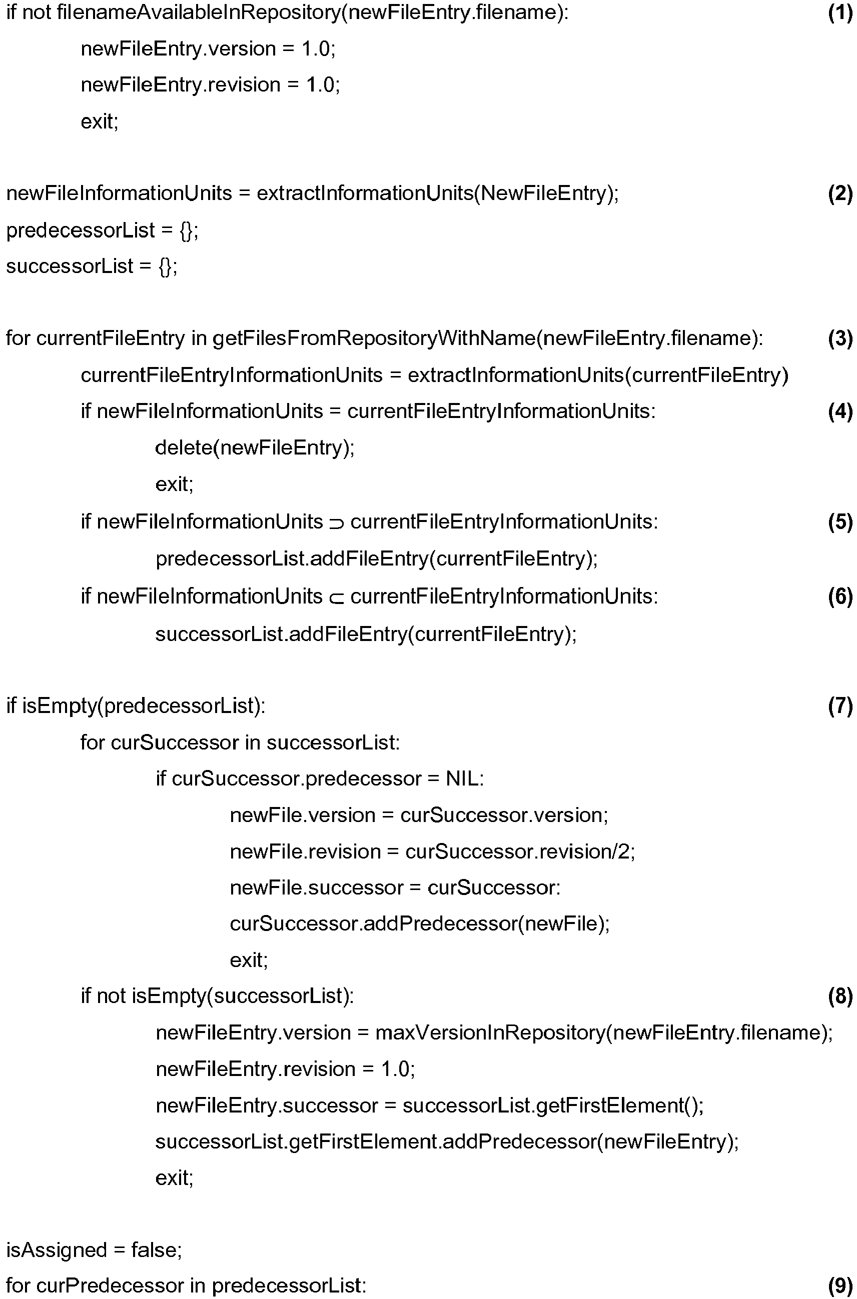

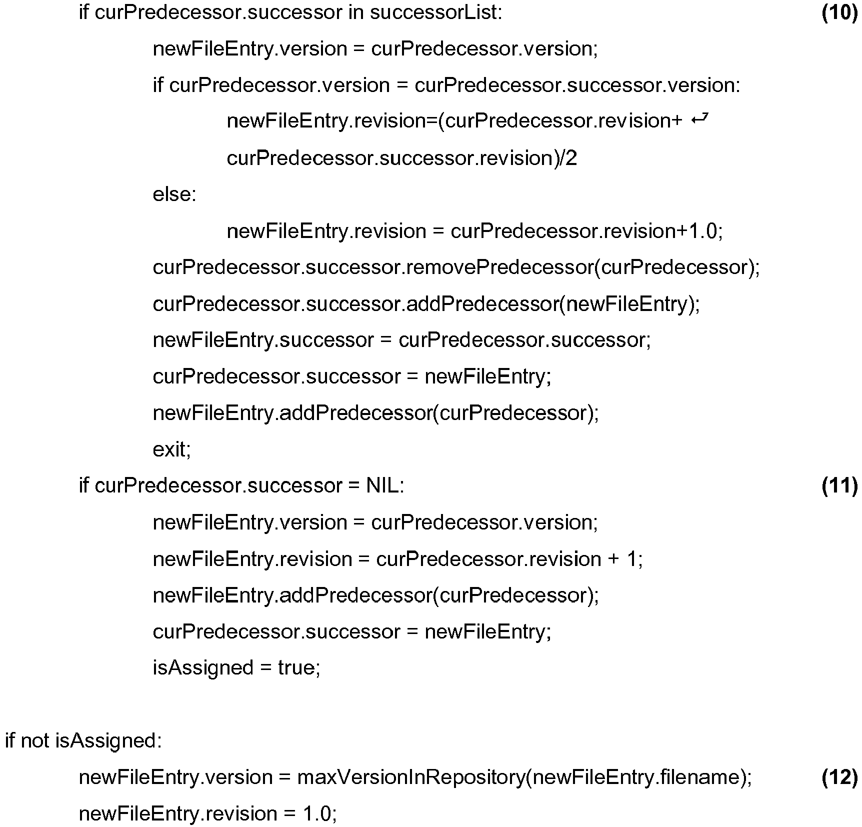

The method as exemplarily described by the foregoing pseudo-code includes the following actions and decisions. Note that the numerals in brackets refer to the corresponding sections of the pseudo-code.
(1): The file repository is checked if the filename of a newly added file is already in the repository. If not the new file is assigned version 1.0, revision 1.0
(2): File information units are extracted from the newly added file.
(3): All file entries from files having the same name as the newly added file are iterated to check:
(4): if a file contains the same information units is already in the repository. If so, do not insert the new file in the file repository.
(5): if there is a file entry which incorporates a subset of new file's information units. If so, the existing file is a potential predecessor of the new file, and the existing file is added to the list of potential predecessors of the new file (predecessorList)
(6): if there is a file entry which incorporates a superset of new file's information units. If so, the existing file is a potential successor of the new file, and it is added to the list of potential successors of the new file (successorList)
   Once this checking has been performed on all file entries having the same file name as the newly added file, and after composing the lists of potential successors and potential predecessors the method continues and:
(7): checks if the list of predecessors is empty. If so, the list of successors is checked for an entry without predecessor. If such entry is found, the new file is the predecessor of that file entry
(8): If no successor without predecessor is found, the first successor is taken as successor and the new file entry is a new predecessor branch of that successor.
   If the predecessor list is not empty the method
(9): checks the list of potential predecessors for:
(10): a potential predecessor, which has a successor in the list of potential successors of new file entry. If such entry is found the new file entry is an intermediate revision of those file entries
(11): a potential predecessor which has no successor. If such entry is found the new file entry is the successor of that file entry and becomes the new head version.
(12): In case all of the actions and decisions did not produce a proper relationship the method concludes that the new file entry is a new version of the files having the same file name.

In addition to reducing the manual interaction required for populating and managing a file repository the inventive method provides a convenient way of finding out how many versions of a particular file exist. Also, with respect to a video or movie production, the inventive method allows for simple deduction of how many days a camera has been used. Further, the most recent version is easily identified in the repository, irrespective of the sequence in which the files were entered in to the repository, or of a date that may be associated with a file, since the file date may be modified even through read access operations. Yet further, the ordered files of the file repository allow for recapitulating the evolution of a file and its content.

### Brief description of drawings

In the following section the invention will be described with reference to the drawing, in which
- Fig. 1: shows a flow diagram corresponding to a first part of the method in accordance with the invention;
- Fig. 2: shows a flow diagram corresponding to a second part of the method in accordance with the invention;
- Fig. 3 a)-g): represents various relationships between same-named files as identified by a method in accordance with the invention; and
- Fig. 4: depicts an exemplary and schematic block diagram of a file repository in accordance with the invention.

### Detailed description of embodiments

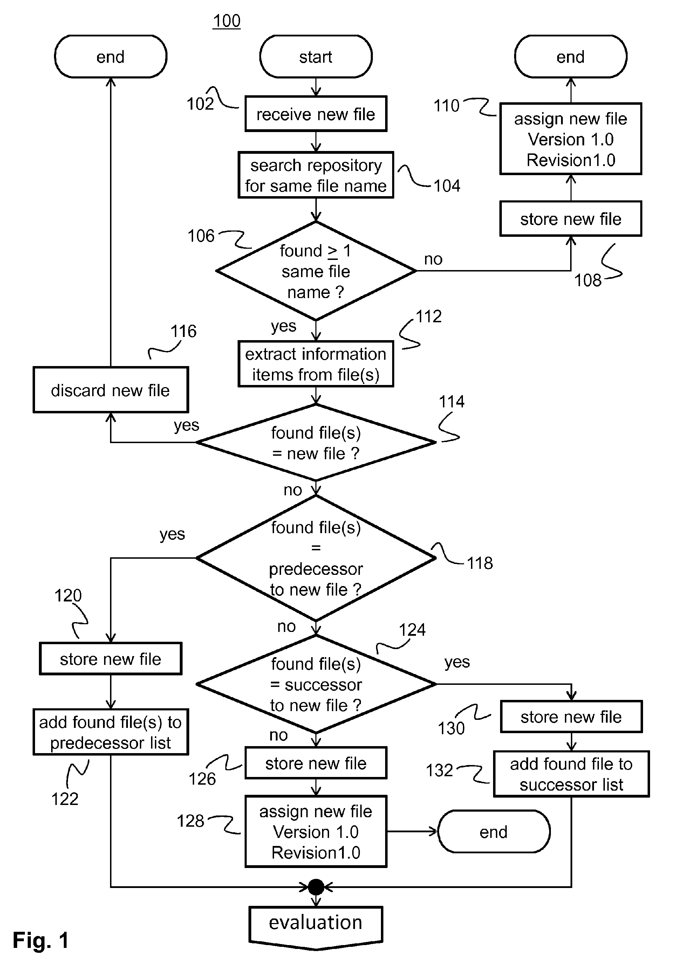

Figure 1 shows a flow diagram of a first part, or list population part, of the method according to the invention. Once started, the method waits to receive a new file (waiting not shown in the figure). A new file is received in step 102, and in step 104 the repository is searched for files having the same file name. If no file having the same file name is found, branch "no" of step 106, the new file is stored in the repository, step 108, and assigned attributes "version 1.0" and "revision 1.0", step 110. The "active part" of the method is then terminated and the method starts over, waiting to receive a new file (starting over not shown in the figure).

If a file having the same file name as the new file is found in the repository, branch "yes" of step 106, in step 112 information items relating to the content are extracted from the new file and each of the files found in searching step 104. Examples for the nature and content of the information items have been discussed further above. For each pair of new file and file found in searching step 104 step 114 checks if the two files are identical. The checking is based on comparing the extracted information items. If a file found in searching step 104 is identical to the new file, branch "yes" of step 114, the new file is discarded, step 116, and the method is terminated. This step is performed for each file found in searching step 104. The termination of this part of the method will, similar to the "no"-branch of comparison step 106, typically result in the method starting over. It is, however, on both occasions, possible to actually terminate the method and re-start it manually when a new file is to be entered into the repository.

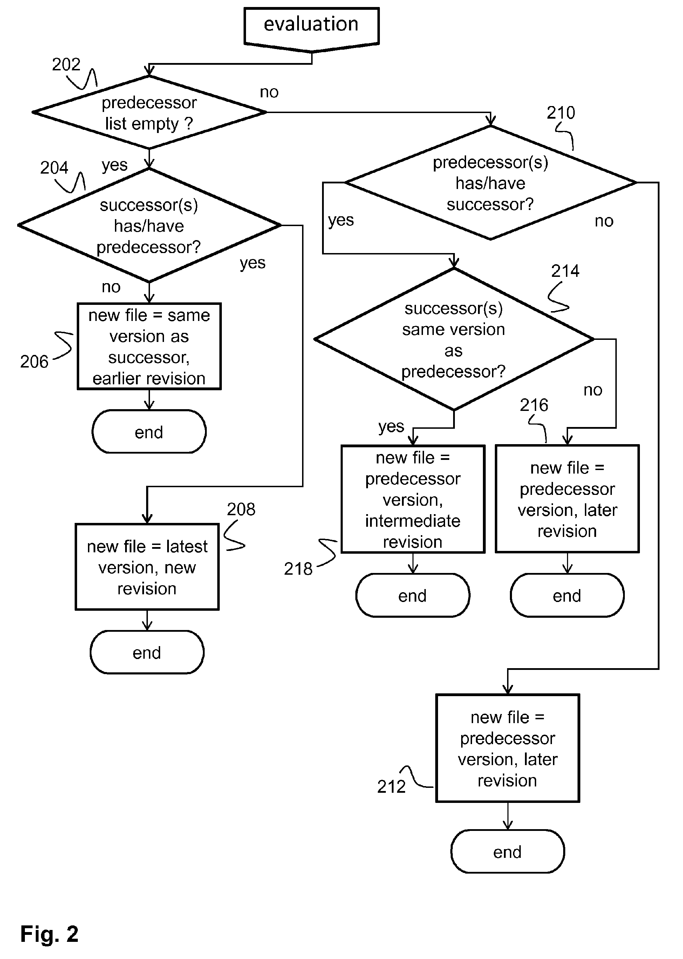

If a file found in the repository and the new file are not identical, "no"-branch of step 114, in step 118 the method checks if the file found in step 104 is a predecessor to the new file. Like step 106, this step is repeated for all files found in the repository that have the same file name as the new file. If a file in the repository is a predecessor to the new file, "yes"-branch of step 118, the new file is stored in the repository, step 120, and the file found in the repository in step 104 is added to a list containing potential predecessors to the new file, step 122. Then, the method proceeds to the evaluation part, which will be described later with reference to figure 2.

If a file found in the repository in step 104 is not a predecessor to the new file, "no"-branch of step 118, in step 124 the method checks if this file is a potential successor to the new file. This checking is repeated for all files found in step 104 that had not been finally treated in previous steps. If no file is identified to be a predecessor or a successor to the new file, "no"-branch of step 124, the new file is stored in the file repository in step 126 and assigned attributes "version 1.0" and "revision 1.0", step 128. The method is then terminated and may start over.

If the file found in the repository in step 104 is a potential successor to the new file, "yes"-branch of step 124, the new file is stored in the file repository, step 130, and added to a list containing potential successors to the new file, step 132. Then, the method proceeds to the evaluation part, which, as mentioned above, will be described below with reference to figure 2.

Figure 2 shows a flow diagram of a second part, or evaluation part, of the method according to the invention. In this part of the method entries in the previously generated or populated lists containing potential predecessors or potential successors to a new file are evaluated in order to eventually assign correct version and revision numbers to the new file.

Once all files found in the repository that have the same file name as the new file have been analyzed and entered into one of the lists of potential predecessors or potential successors, or have otherwise been finally dealt with in the first part of the method described with reference to figure 1, in step 202 the method checks if the list containing potential predecessors to a new file is empty. If so, "yes"-branch of step 202, the list of potential successors is checked if a potential successor to the new file has a predecessor, step 204. If no potential predecessor is found for a potential successor, "no"-branch of step 204, in step 206 the new file is identified as the same version as the successor, but earlier revision. The attributes of the files are updated accordingly (not shown), and the method is terminated. It is to be noted that in the context of the method described herein the attributes of the files relate to version and revision numbers.

If a potential successor is found which has a predecessor, "yes"-branch of step 204, in step 208 the new file is identified as the latest version relating to the same content the successor, and as a new revision. Again, the attributes of the files are updated accordingly (not shown) and the method is terminated. Checking step 204 is performed for each entry in the list of potential successors for a particular new file (not explicitly shown in figure 2).

If the list of potential predecessors is not empty, "no"-branch of step 202, the method continues by checking one or more of the entries in the list of predecessors have a successor in the list of potential successors, step 210. If not, the new file contains content of the same version, but represents a later revision thereof, step 212. The attributes of the files are updated accordingly (not shown), and the method is terminated.

If the a predecessor from the list of potential predecessors has a successor in the list of potential successors, "yes"-branch of step 210, the method checks, in step 214, if successor and predecessor relate to the same version. If not, the new file is a predecessor version to the successor found in step 210, but a later revision, step 216. The attributes of the files are updated accordingly (not shown) and the method is terminated.

If successor and predecessor relate to the same version, "yes"-branch of step 214, the new file is a predecessor version to the successor found in step 210, but an intermediate revision, step 218. Yet again, the attributes of the files are updated accordingly (not shown) and the method is terminated.

As mentioned before, any reference to the termination of the method is to be understood as termination of the method for an individual new file that had been received at the file repository. In this context termination can include that the method needs to be started again manually or by an automatically created trigger signal following reception of a further new file. However, termination of the method can also include waiting for a further new file to be received without departing from the scope of the invention.

It is further to be noted that the method's checking steps are repeated for all list entries and all files found in the repository that have the same file names as the new file, respectively.

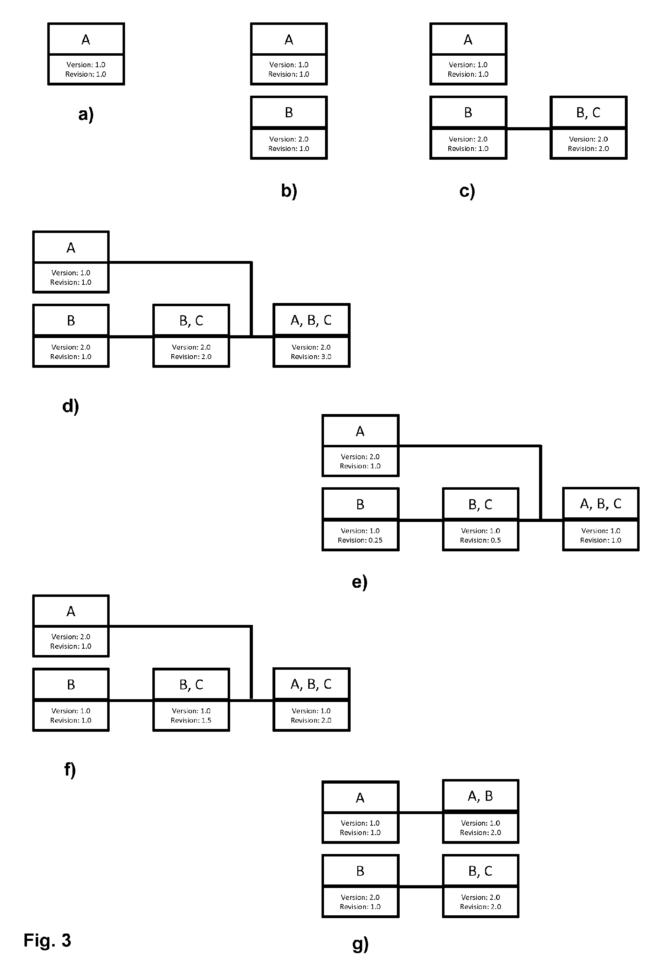

Figure 3 a) - g) represents various relationships between same-named files as identified by a method in accordance with the invention, i.e. is a representation of the assignment of attributes to a new file under various conditions.

Part a) of figure 3 depicts a new file with information item "A" that is entered into the file repository. It is assumed that either the file repository was empty at the time of entering the new file, or that the new file has a file name that was not found in the file repository (see "no"-branch of step 106 of figure 1). This file is assigned the attributes "version 1.0" and "revision 1.0", since it is the first file having or relating to a particular content, expressed here by information item "A". This is a result of the execution of condition (1) of the pseudo code presented further above.

In part b) of figure 3 a new file having information item "B" is entered into the file repository, having the same file name as the existing file entered in part a) of figure 3. This time, the file repository is not empty: the file entered in part a) of figure 3, having information item "A", is already there. As information items "A" and "B" are different from each other, the files are judged having or relating to different content, even though they have the same file name. Consequently, the new file is given the attributes "version 2.0" and "revision 1.0". This is a result of the execution of condition (12) of the pseudo code presented further above.

In part c) of figure 3 a further new file is entered into the file repository, having information items "B, C" and the same file name as the existing files entered in part a) or part b) of figure 3. Evaluating the information items suggests that it is related to the file entered into the file repository in part b) of figure 3, since both share the information item "B". In addition, the new file has information item "C", which indicates that it has additional content over the existing file. Consequently, the new file is assigned attributes "version 2.0" and "revision 2.0", i.e. the new file is a successor to the existing file entered in part b). This is a result of the execution of condition (11) of the pseudo code presented further above.

The further new file added in part d) of figure 3 has, in addition to the same file name, information items "A, B, C". Evaluating the information items suggests that it is related to the file entered into the file repository in part c) of figure 3, since both share the information items "B" and "C". However, it also has information item "A", which links it with the file entered in part a) of figure 3. Obviously, the file is linked with two previously entered files, and is a successor to both. So the new file is assigned attributes "version 2.0" and "revision 3.0", if the file entered in part c) of figure 3 is considered the most relevant predecessor. Alternatively, the file may be given the attributes "version 1.0" and "revision 2.0". The new file can also carry attributes of both variants, for later disambiguation. Both variants are results of the execution of condition (11) of the pseudo code presented further above. The new file is in any case the "head revision" to all predecessor versions, as it contains all information units found in previously entered files.

Part e) of figure 3 shows the assignment of attributes in case the files are entered in reverse order, i.e. the file with information items "A, B, C" is entered first, followed by the file having items "B, C", followed by the file with item "B", and finally followed by the file with item "A". The file entered first will be assigned attributes "version1.0" and "revision 2.0", in accordance with condition (1) of the pseudo code. The file entered second will be assigned attributes "version 1.0" and "revision 0.5" in accordance with condition (7) of the pseudo code, as it has less information than the existing file. The file entered third will consequently be assigned attributes "version 1.0" and "revision 0.25", again in accordance with condition (7) of the pseudo code, as it has even less information than the existing files, but is still linked by at least one information item. The file entered last will be assigned attributes "version 2.0" and "revision 1.0" in accordance with condition (8) of the pseudo code, as it is linked by an information item that is only present in the file entered first. It is apparent that the links between the files are the same as found in part d) of figure 3.

Part f) of figure 3 shows the assignment of attributes in case the files are entered in an arbitrary order, e.g. first file having information item "B", second file having information items "A, B, C", third file having information item "A", and last file having information items "B, C". Obviously, in accordance with condition (1) of the pseudo code the first file is assigned attributes "version 1.0" and "revision 1.0". The file entered second is assigned attributes "version 1.0" and "revision 2.0", in accordance with condition (11), as the second file has additional information items to those of the first file. The file entered third has information items in common with the file entered second, but no items in common with the first file. In accordance with condition (8) it is assigned attributes "version 2.0" and "revision 1.0". Finally, the last file entered is assigned attributes "version 1.0" and "revision 1.5", in accordance with condition (10) of the pseudo code, as it shares information items with the first entered file and the second entered file, but none with the third file entered. It is apparent that the links between the files are the same as found in part d) and part e) of figure 3.

Part g) of figure 3 shows the assignment of attributes for a different case considering files having less common information items. The initial situation is the same as shown in part b) of figure 3. The next file entered has information items "B, C" and is assigned attributes "version 2.0" and "revision 2.0", in accordance with condition (11) of the pseudo code, as it is linked only to the file having information item "B" and has additional information. When the file having information items "A, B" is entered it is assigned attributes "version 1.0" and "revision 2.0", in accordance with condition (11) of the pseudo code. There will be two head versions with information item B being redundant in the head versions, but otherwise the information item A might get lost.

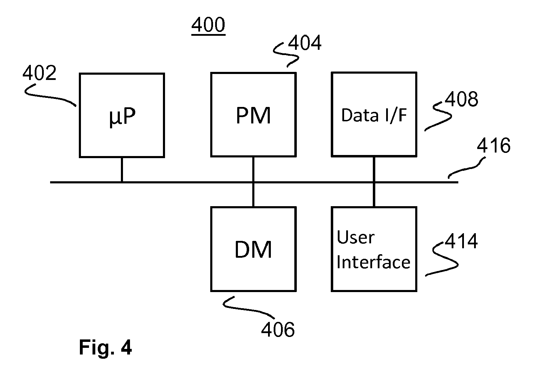

Figure 4 shows an exemplary block diagram of a file repository 400 in accordance with the present invention. Microprocessor 402 is linked to program memory 404, data memory 406, data interface 408 and user interface 414 via data bus 416. The microprocessor is of a commonly known and used type and may be constructed in accordance with any suitable one of the known architectures, e.g. x86, x86-64, ARM, MIPS, etc. Program memory 404 and data memory 406 are implemented as random access memory (RAM) and non-volatile memory, or a combination thereof. The non-volatile memory includes hard disk drives (HDD), Flash-Memory, or a combination thereof. Other non-volatile memory types such as MRAM, optical storage, etc., may also be used in the file repository.

Program memory 404 stores instructions that, when executed by microprocessor 402, cause the file repository to receive, at data interface 408, a first file having a first file name, and to compare the first file name with names of second files already stored in data memory 406 of the file repository. Further, the instructions stored in program memory 404, when executed by microprocessor 402 and in case one or more second files having the first file name are found in data memory 406 of the file repository, cause the file repository, for each individual one of all second files having the first file name, to determine if the individual one of the second files having the first file name is a predecessor to the first file or a successor to the first file, and accordingly to add the second file to a first list containing potential predecessors to the first file or to a second list containing potential successors to the first file.

Once all second files having the first file name have been added to the first list or to the second list the stored instructions cause the file repository to check if the first list is empty, and, in the positive case, to check the second list for an entry relating to a second file having no predecessor.

If such entry is found, the stored instructions cause the file repository to store the first file in the file repository and to mark the stored first file as predecessor to the second file associated with said entry. Otherwise, i.e. if such entry is not found, the instructions stored in program memory 404 and executed by microprocessor 402 cause the file repository to store the first file in the file repository and to mark the stored first file as predecessor branch to an arbitrarily selected second file contained in the second list.

When executed by microprocessor 402 the instructions stored in program memory 404, if the first list is not empty, further cause the file repository to check the first list for an entry relating to a second file that has a successor in the second list. If such entry is found, the executed instructions cause the file repository to store the first file in the file repository and to mark the stored first file as intermediate revision between the file referred to by said entry and said successor in the second list. Otherwise, the executed instructions cause the file repository to check the first list for an entry relating to a second file having no successor, to store the first file in the file repository and to mark the stored first file as successor to the second file and as head revision.

If none of the conditions before had been met, i.e. if the very first comparison turns out that no second file is found in the repository that has the first file name, the executed instructions cause the file repository to store the first file in the file repository under the first file name and to mark the first file as new version.

Generally speaking, the file repository in accordance with the present invention includes an interface adapted to receive a file having a first name and a general processing unit adapted to split files into information units and to extract some or all of the information units from the files. The repository further includes a unit adapted for identifying potential predecessors or successors, in terms of versions or revisions, to a received file, and to manage version and revision attributes for files depending on information units extracted from files.

## Claims

1. A method of automatically generating revisions or versions of files having the same file names, comprising:
- a) receiving, at an interface, a first file having a first file name;
- b) comparing the first file name with names of second files already stored in a file repository;
wherein the method further comprises, if one or more second files having the first file name are found in the repository:
- c) for each individual one of all second files having the first file name, determining if the individual one of the second files having the first file name is a predecessor to the first file or a successor to the first file, and accordingly adding the second file to a first list containing potential predecessors to the first file or to a second list containing potential successors to the first file,
wherein the method further comprises, once all second files having the first file name have been added to the first list or to the second list:
- d) checking if the first list is empty;
wherein, if the first list is empty, the method further comprises:
- e) checking the second list for an entry relating to a second file having no predecessor, and, if such entry is found, storing the first file in the file repository and marking the stored first file as predecessor to the second file associated with said entry, or, if such entry is not found, storing the first file in the file repository and marking the stored first file as predecessor branch to an arbitrarily selected second file contained in the second list;
wherein, if the first list is not empty, the method further comprises:
- f) checking the first list for an entry relating to a second file that has a successor in the second list, and, if such entry is found, storing the first file in the file repository and marking the stored first file as intermediate revision between the file referred to by said entry and said successor in the second list, or checking the first list for an entry relating to a second file having no successor, storing the first file in the file repository and marking the stored first file as successor to the second file and as head revision;
wherein, if none of the conditions before had been met, the method comprises:
- g) storing the first file in the file repository under the first file name and marking the first file as new version.

2. The method of claim 1 wherein determining if the individual one of the second files having the first file name is a predecessor to the first file or a successor to the first file includes extracting information items from the files and comparing information items relating to content of the first file and the second file.

3. The method of claim 1 wherein determining if the individual one of the second files having the first file name is a predecessor to the first file or a successor to the first file includes discarding the first file if the first file corresponds to an individual second file having the first file name that is found in the repository.

4. The method of claim 2, wherein determining whether a second file is a successor or a predecessor to a first file is based on evaluating whether information items relating to content of the first file represent subsets or supersets of information items relating to the content of the second file.

5. The method of claim 2, wherein the information items relate to different types of information representing one or more from the non-exclusive list including creation time and/or date, time and/or date of last manipulation, SMPTE time code, scene number, and shot number.

6. The method of claim 1, wherein storing the first file in the file repository comprises assigning attributes version 1.0 and revision 1.0 to said first file.

7. The method of claim 1, wherein content information includes data representing audio and/or visual data, text, or software code.

8. The method of claim 1, wherein a tree-structure is generated or updated that indicates relationships between files having the same file names with respect to being predecessors or successors, and further including reading from and writing to a database file storing the tree structure.

9. File repository including an interface adapted to receive a file having a first file name,
wherein the file repository is adapted to extract information units from the files;
wherein the file repository includes a unit adapted for identifying potential predecessors or successors to versions or revisions; and wherein the file repository includes a unit adapted for generating versions and revisions for files depending on the information units, and for maintaining a list or file allowing for retrieving the hierarchical structure of the files having the same file name.
